(19)

Europäisches
Patentamt
European
Patent Office
Office européen
des brevets

(11)  **EP 2 237 191 A2**

(12)  **EUROPEAN PATENT APPLICATION**

(43) Date of publication:
06.10.2010 Bulletin 2010/40

(51) Int Cl.:
*G06K 9/00* (2006.01)     *G06T 7/00* (2006.01)

(21) Application number: 10250446.1

(22) Date of filing: 10.03.2010

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **31.03.2009 GB 0905564**

(71) Applicant: **Sony Corporation**
**Tokyo (JP)**

(72) Inventors:
• **Beresford, Ratna**
  **Basingstoke, Hampshire RG21 5UF (GB)**
• **Lennon, Daniel**
  **Basingstoke, Hampshire RG24 9ST (GB)**

(74) Representative: **Jackson, Jonathan Andrew et al**
**D Young & Co LLP**
**120 Holborn**
**London EC1N 2DY (GB)**

(54)  **A method and apparatus for object tracking**

(57)     There is described an apparatus and method for tracking objects in video. In particular, there is described a method and apparatus that improves the realism of the object in the captured scene. This improvement is effected by identifying a first and last frame in a video and subjecting the detected path of the object to a correcting function which improves the output positional data.

FIG. 1

**Description**

The present invention relates to a method and apparatus for object tracking.

Currently, there is a need for tracking the position of an object across a series of images. One example for this technology is in sports related television. During a captured live sports event, it is useful to track the position of the ball on the pitch during a video clip so that highlights and other information about the event can be obtained accurately. The accurately captured information can then be subsequently used in the formation of computer simulations of the sports event. For instance, there is the possibility in the computer gaming industry to recreate real life sporting events in a virtual environment. In order to accurately transpose the real life sporting event into the virtual environment, there is a requirement to accurately, and realistically, determine the position of the ball on the pitch, and track the ball, throughout the game using the captured video clip.

One way to achieve this would be to have an operator view the captured images of the sporting event and, for each frame of video, note the position of, say, the ball on the pitch. However, this has a number of disadvantages. Firstly, this approach is very time consuming and very laborious. Secondly, as a television camera at the stadium which is capturing the video is not fixed in position (i.e. the camera pans and tilts to follow the ball), this means that even if the operator notes the location of the ball in each frame of video, this will not provide accurate information identifying the location of the ball on the pitch.

The present invention aims to address the problem of realistically determining the position of the ball on the pitch.

According to a first aspect, there is provided a method of tracking an object in a video of a location captured by at least one camera fixed in position, the video having a first and a second flagged frame, the method comprising:

> detecting a first anchor point in the first flagged frame of video,;
> detecting the position of the object in the location in the first flagged frame and subsequent frames of video;
> detecting a second anchor point in the second flagged frame of video,
> detecting the position of the object in the location in the second flagged frame of video; and
> adjusting the position of the object in the location in the frames of video between the first flagged frame and the second flagged frame in accordance with a polynomial equation wherein metadata identifying the action taking place at the detected first and/or second anchor point is defined and the action is selected from a predetermined list of actions.

This is advantageous because it improves the realism of the modelling of the object in the location. This realism is improved due to the manner in which the position of the object in the location is derived from a video clip of the location. The polynomial equation can fit many different possible movements of the object within the location without any prior knowledge or physical model of the object in question. Also, by providing the metadata at the anchor point, and by allowing selection from a predetermined list of actions, the marking up of video can be achieved more quickly. Moreover, by specifying the anchor point in this manner also reduces the prevention of noise influencing the choice of anchor points. In some sports such as soccer, there are numerous possible types of interaction with the ball and cameras used for tracking can be quite far from the action, so false detections of anchor points can occur in automated systems that do not have this feature.

The polynomial equation may extend between the position of the object in the location in the first flagged frame of video and the position of the object in the location in the second flagged frame of video.

The parameters of the polynomial equation may be selected such that the error measurement between the detected position of the object in the frames of video and the position of the object in the location in the frames of video defined by the polynomial is a minimum.

The second anchor point may be detected in accordance with a change in direction of the object.

The polynomial may be generated using polynomial interpolation.

The polynomial may be generated using a Van Der Monde matrix.

Prior to the tracking of the object in the clip, the method may comprise defining a plurality of positions on a frame of video that corresponds to a known position in the location, and defining other positions in the video relative to the known position in the location from the frame of video.

The location may contain at least one straight line, and prior to the tracking of the object in the clip, the position of the lines in the clip captured by the camera are fitted to correspond to the straight lines in the location.

The adjusted position of the object may be used to define the position of the object within a virtual environment.

According to a second aspect of the present invention, there is provided an apparatus for tracking an object in a video clip of a location captured by at least one camera fixed in position, the video having a first and a second flagged frame, the apparatus comprising:

> a first detector operable to detect a first anchor point in the first flagged frame of video,

a second detector operable to detect the position of the object in the location in first flagged frame and subsequent frames of video;

a third detector operable to detect a second anchor point in the second flagged frame of video and to detect the position of the object in the location in the second flagged frame of video; and

a processor operable to adjust the position of the object in the location in the frames of video between the first flagged frame and the second flagged frame in accordance with a polynomial equation wherein metadata identifying the action taking place at the detected first and/or second anchor point is defined and the action is selected from a predetermined list of actions.

The polynomial equation may extend between the first position of the object in the location in the first flagged frame of video and the second position of the object in the location in the second flagged frame of video.

The parameters of the polynomial equation may be selected such that the error measurement between the detected position of the object in the subsequent frames of video and the position of the object in the location in the subsequent frames of video defined by the polynomial is a minimum.

The second anchor point may be detected in accordance with a change in direction of the object.

The polynomial may be generated using polynomial interpolation.

The polynomial may be generated using a Van Der Monde matrix.

This is a useful implementation in a computer as a polynomial whose coefficients are calculated as a matrix is easier to process compared with a traditional polynomial solution.

Prior to the tracking of the object in the clip, the processor may be operable to define a plurality of positions on a frame of video that corresponds to a known position in the location, and defining other positions in the video relative to the defined position in the location in the frame.

The location may contain at least one straight line, and prior to the tracking of the object in the clip, the position of the lines in the clip captured by the camera are fitted to correspond to the straight lines in the location.

The adjusted position of the object may be used to define the position of the object within a virtual environment.

There is also provided a computer having a storage medium containing video material and the adjusted position data associated therewith generated in accordance with a method according to any embodiments of the present invention, and a processor, wherein the processor is operable to generate a virtual environment containing the object located at a position in the virtual environment that corresponds to the stored adjusted position data associated with the video material.

There is also provided a storage medium containing video material and adjusted position data associated therewith generated in accordance with a method according to any one of the embodiments of the present invention.

According to another aspect, there is provided a system for capturing and tracking an object in a location comprising at least one camera fixed in position and an apparatus according to any one of the embodiments of the invention.

There is also provided a computer program containing computer readable instructions which, when loaded onto a computer, configure the computer to perform a method according to any one of the embodiments of the present invention.

A storage medium configured to contain the computer program therein or thereon.

Prior to the tracking of the object in the clip, the method may include defining a position on a frame of video that corresponds to a known position in the location, and defining other positions in the clip of video relative to the defined position in the location.

The location may contain at least one straight line, and prior to the tracking of the object in the clip, the position of the lines in the clip captured by the camera are fitted to correspond to the straight lines in the location.

According to a second aspect, there is provided an apparatus for tracking an object in a video clip of a location captured by at least one camera fixed in position, the video clip having a start and an end frame, the apparatus comprising:

a first detector operable to detect a first anchor point in the start frame of video, the first anchor point defining the first position of the object in the location;

a second detector operable to detect the position of the object in the location in subsequent frames of video;

a third detector operable to detect a second anchor point in the end frame of video, the second anchor point defining a second position of the object in the location; and

a processor operable to adjust the position of the object in the location in the subsequent frames of video in accordance with i) the defined position of the first and second anchor points in the location and ii) the detected position of the object in the location in the subsequent frames of video.

The position of the object in the location from the subsequent frames of video may be defined by a polynomial equation extending between the first position of the object in the location and the second position of the object in the location.

The parameters of the polynomial equation may be selected such that the error measurement between the detected position of the object from the subsequent frames of video and the position of the object in the location from the subsequent frames of video defined by the polynomial is a minimum.

The second anchor point may be detected in accordance with a sharp change in direction of the object.

The polynomial may be generated using polynomial interpolation.

The polynomial may be a Van Der Monde polynomial.

Prior to the tracking of the object in the clip, the processor may be operable to define a position on a frame of video that corresponds to a known position in the location, and other positions in the clip of video may be defined relative to the defined position in the location.

The location may contain at least one straight line, and prior to the tracking of the object in the clip, the position of the lines in the clip captured by the camera may be fitted to correspond to the straight lines in the location.

According to another aspect, there is provided a system for capturing and tracking an object in a location comprising at least one camera fixed in position and an apparatus according to any one of the embodiments of the invention.

According to other aspects, there is provided a computer program containing computer readable instructions which, when loaded onto a computer, configure the computer to perform a method according to any one of the embodiments and a storage medium containing the computer program.

Embodiments of the present invention will be described, by way of example only, and with reference to the following drawings in which;

Figure 1 shows an aerial view of a soccer pitch;
Figure 2 shows a schematic diagram of an image processing centre according to an embodiment of the present invention;
Figure 3 shows a diagram explaining triangulation;
Figure 4A shows a prospective view of a section of the soccer pitch from a camera shown in the aerial view of in Figure 1;
Figure 4B shows a diagram illustrating line correction in the image of Figure 4A according to an embodiment;
Figure 5A-5F shows illustrative examples of the object tracking according to embodiments of the present invention;
Figure 6A-6E shows another illustrative example of the object tracking according to embodiments of the present invention;
Figures 7A and 7B show another illustrative example of the object tracking according to embodiments of the present invention; and
Figure 8 shows a computer system upon which embodiments of the invention can be used.

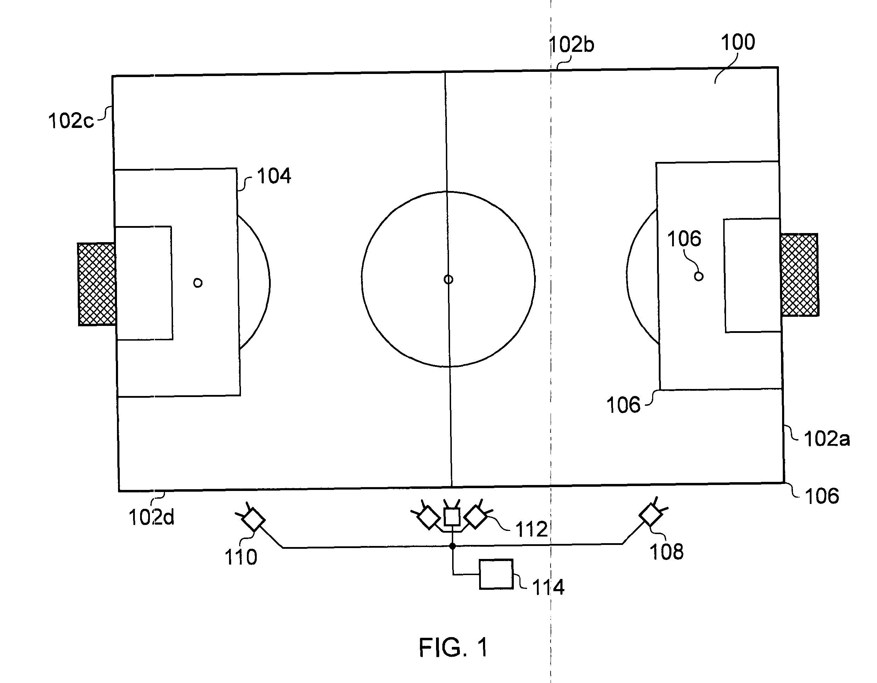

Referring to Figure 1, there is shown a soccer pitch defined by a playing area 102A-D. As with any soccer pitch there are provided a number of other lines (such as the penalty box, the centre circle etc) defining the playing area. One such line is along the edge of the penalty box 104 shown in Figure 1.

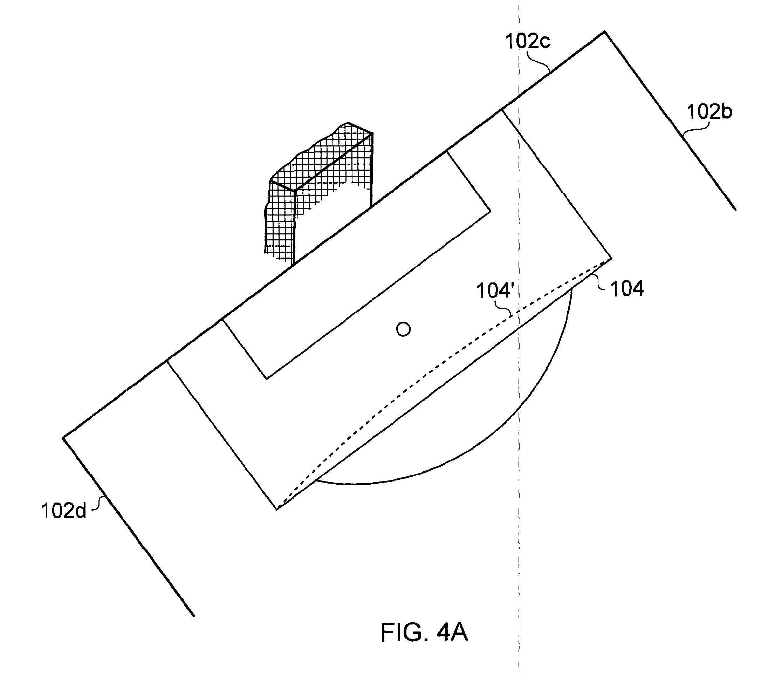

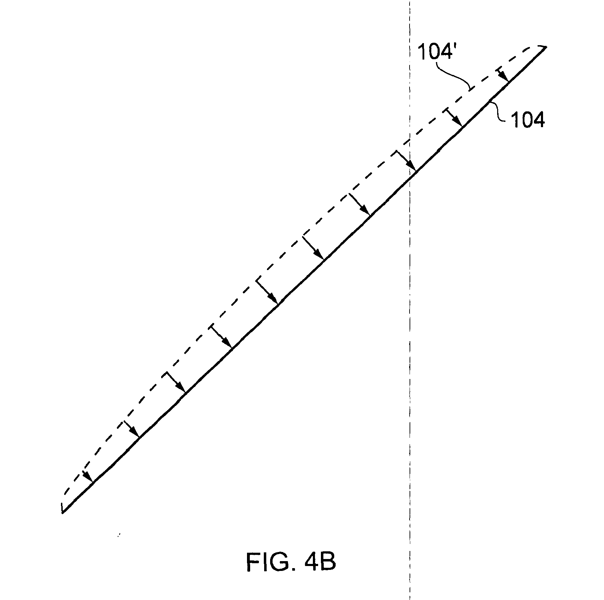

Also shown in Figure 1 are arbitrarily chosen points of reference 106. Although only three points of reference is shown in Figure 1, in embodiments, any number of points of reference are chosen for each camera. These points of reference do not change during the match and are, in this case, located at one corner of a penalty box, at a penalty spot and at a corner of the pitch in Figure 1. However, these points of reference 106 could be located anywhere on the pitch 100. The importance of these points of reference will become apparent when referring to Figures 4A and 4B. It should be noted here that although the foregoing discusses embodiments relating to a soccer pitch, any sports field or even location that has a static layout can equally be used.

In order to capture images from the soccer pitch 100, the camera arrangement of Figure 1 is adopted. In particular, video cameras 108 and 110 are located at respective so-called "18 yard lines" on the soccer pitch 100. These cameras are preferably high definition cameras and their field of view extends toward the goal area. These cameras have a static field of view. Additionally provided is a camera arrangement 112 which is located at the centre line of the soccer pitch. The field of view of each of the cameras slightly overlaps and a composite image of the entire soccer pitch is generated by "stitching" together the three different fields of view provided by the camera arrangement 112. The stitching is known in the art (see for example GB-A-2 444 533 which details the arrangement and the stitching of the images) and so this particular feature will not be described in any further detail here. The camera arrangement 112 includes three camera elements, each of which are high definition cameras fixed in position and each having a static field of view.

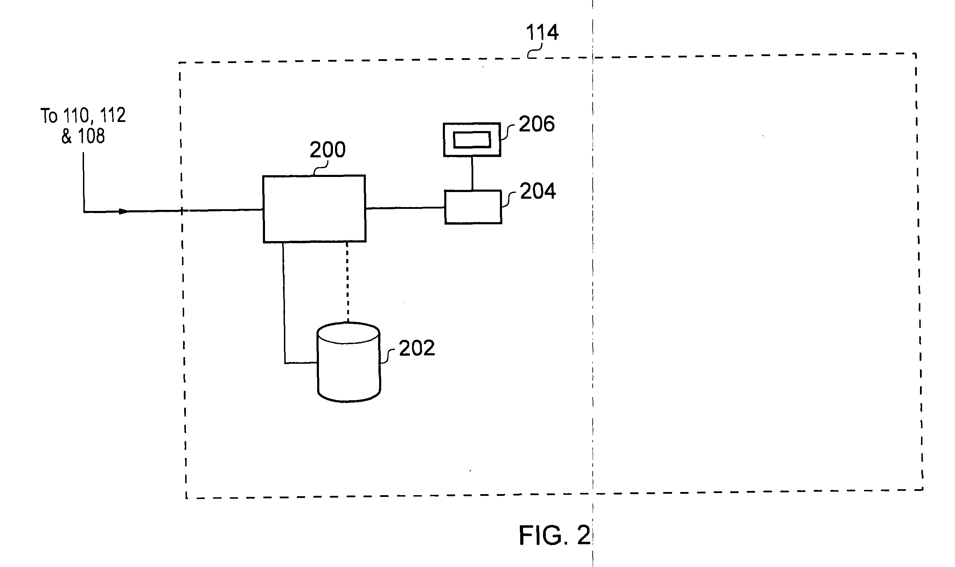

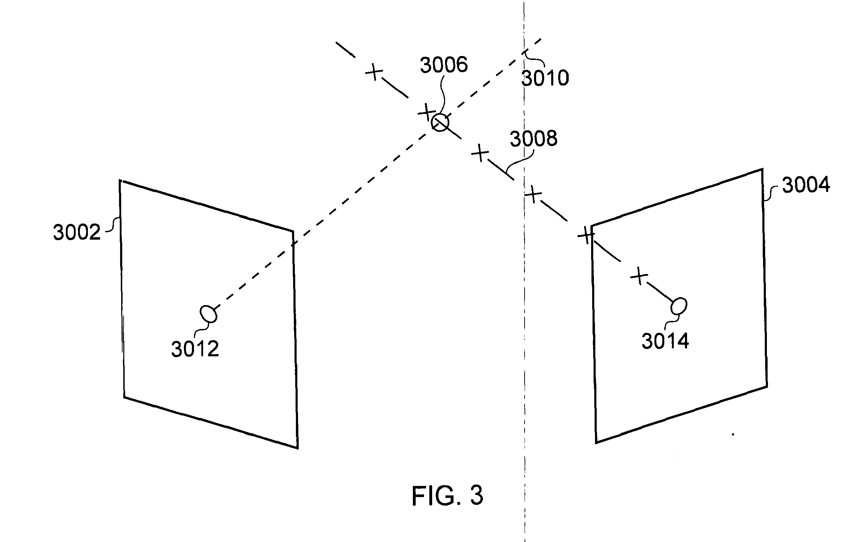

The output of the 18 yard cameras 108 and 110 and the output of the camera arrangement 112 are fed into an image processing centre 114 as discussed in Figure 2. Each of the cameras have a fixed field of view, a known location and known parameters such as focal length. Therefore, as these parameters are fixed, it is possible to use the output of two of the cameras to determine the position of the ball on the pitch 100 using a triangulation technique. This will be described in relation to Figure 3.

In the particular embodiment, the output of one of the 18 yard cameras 108 is used with the output of the camera arrangement 112 to triangulate the position of an object in it's field of view and the other 18 yard camera 110 is used with the output of the camera arrangement 112 to triangulate the position of an object in it's field of view.

Referring to Figure 2, the output from each of the cameras 108 and 110 as well as the camera arrangement 112 is fed into an image processor 200 located within the image processing centre 114. The image processor 200 is a computer that is particularly suited to processing of High Definition images. One such processor may be the so-called Cell Processor.

Attached to the image processor 200 is a storage medium 202 which is used for storing the image data from each of the 18 yard cameras 108, 110 and the camera arrangement 112. Additionally, the storage medium 202 stores position data of the ball on the pitch as well as other metadata relating to the video content. Metadata is a term of art and generally means "data about data". In the context of image processing, the metadata may include details of the cameraman, details of the location, good shot markers and other information relating to the video material. However, in embodiments, the metadata includes information relating to the content of each frame of video such as position of players located on the pitch, details of the actions taking place in each frame and information identifying the position of the ball on the pitch. Usually, metadata contains less data than the video data.

Additionally, stored in the storage medium is calibration information. This calibration information provides information that allows triangulation to take place. This calibration information will be described with reference to the fixed points of Figure 1. As noted above, each of the cameras in the arrangement of Figure 1 is fixed in position relative to each other and the pitch 100. Therefore, by defining a number of positions on the pitch (in this case 3 whose physical position on the pitch is known) during calibration of the system, and knowing the dimensions of the pitch, and the parameters of the camera, for example focal length, it is possible for the image processor 200 to generate calibration data that defines the relationship between each pixel in the captured image for each camera and the corresponding position on the soccer pitch 100. In other words, the position of the object on the pitch 100 is calculated from the position of the object on the images output by two of the cameras. This calibration information is used when performing triangulation and is sometimes referred to as the "camera matrix". This is described in Figure 3.

In Figure 3, there are two image planes 3002 and 3004, which are output images from one of the 18-yard cameras 108 and one of the camera elements in the camera arrangement 112. For simplicity only one object 3006 is shown in the image planes 3002 and 3004. Object 3006 is at a position on the "real-life" pitch (i.e. a 3 D location). The object 3006 is at a position 3012 in image plane 3002 and position 3014 in image plane 3004. With triangulation, it is possible to determine the position of the object 3006 on the pitch from the position of the object in the image planes 3002 and 3004.

If there is a straight line 3010, or narrow cone, drawn from the position of the object 3012 in image plane 3002 and a corresponding straight line 3008, or narrow cone drawn from the position of the object 3014 in image plane 3004 into 3D space (or in other words, perpendicular to the image plane), where the lines intersect is deemed to the position of the object 3006.

However, as the skilled person will appreciate, due to inherent errors in the calibration of the system, it is not always the case that the lines 3008 and 3010 actually intersect. In order to address this, in embodiments, the shortest vector joining the lines 3008 and 3010 is found and the midpoint of this vector is determined to be the position of the object 3006. Using this method, if the lines 3008 and 3010 do intersect then the position of the object 3006 will be the point of intersection. During calibration of the system, object 3006 will be one of the reference points 106 and during object detection and tracking, the object 3006 will be on the pitch 100 (for example a player or the ball).

Turning back to Figure 2, the storage medium may be a hard disk drive, or optical media which remains within the image processing centre 114. Alternatively, the storage medium may be removable, such as a Memory Stick®. Clearly, storage medium 202 may equally be a combination of these two types of storage media.

Also connected to the image processor 200 is a user terminal 204. Although not shown, it is expected that the user terminal will include at least one user input allowing an operator to provide information to the user terminal and subsequently to the image processor 200. Attached to the user terminal 204 is a user display 206 that displays the image material provided from each of the cameras 108 and 110 or the camera arrangement 112 either in real time or via the storage medium 202. Also displayed on the user display 206 is a graphical user interface allowing the user to control and interact with the image processor 200.

In Figure 4A, the field of view from one 18 yard camera 108 is shown. As noted in Figure 4A, there is illustrated two lines 104 and 104'. In fact, line 104' is the image of the 18 yard line provided by the 18 yard camera 108. Line 104 is the actual line on the soccer pitch 100. The phenomenon of line 104' appearing slightly curved is due to lens distortion within the 18 yard camera 108. Lens distortion has the effect of making a straight line appear curved. This distortion is a problem when assessing the position of an object on the soccer pitch 100 using the image captured by the 18-yard camera 108. This is because it is not possible to easily measure lens distortion when generating the calibration data.

Accordingly, in embodiments of the present invention, the operator of the user terminal 204 will view each of the outputs of the 18 yard line cameras 108 and 110 as well as the camera arrangement 112 and straighten each of these lines to ensure that the lens distortion does not corrupt the position data of the object on the pitch 100 gathered when tracking the object. This correction can be seen in Figure 4B. The operator of the user terminal 204 redraws the 18 yard line 104 as being straight. The dimensions of the pitch stored in the storage medium 202 are updated to incorporate these changes.

By performing this line correction during calibration of the system (i.e. before any detecting or tracking of an object takes place), the positional accuracy of any subsequently detected or tracked object is improved.

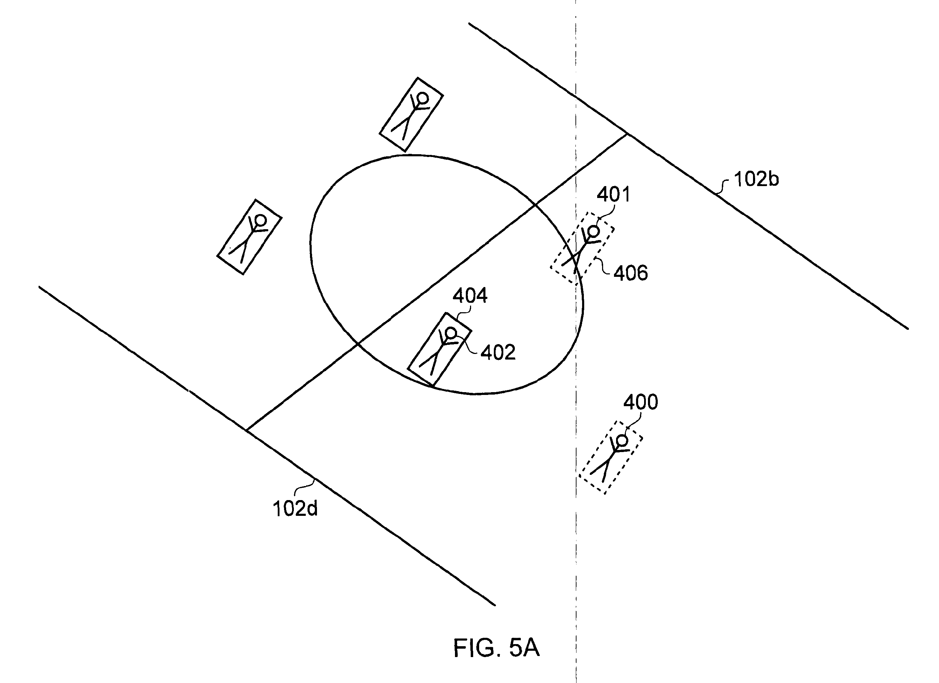

Referring to Figures 5A-5F, a number of players can be seen around the centre circle of the soccer pitch. In particular, player A 400, player B 401 and player C 402 are particularly referred to in this Figure. Player A and player B play for team A and player C plays for team B. As will be noted, each of the players is highlighted by one of two highlights surrounding the player. Player C 402 is highlighted with a team A highlight 404 and players A and B are highlighted by a team B highlight 406. In the Figure, team A has a solid line as a highlight and team B having a dashed line as a highlight. However, typically these would be different colours instead of different styles of lines.

Information identifying player A, player B and player C is stored within the storage medium 202 and the movement, and corresponding position of the respective players during the soccer match is also stored within storage medium 202. Different techniques for tracking the players are known in the art. For instance, player tracking is discussed in GB-A-2452512 and so will not be further discussed here.

Further, in embodiments the position of ball 410 is detected in each frame of video. The position of the ball 410 on the pitch is calculated using triangulation and is also stored in the storage medium 202 in correspondence with the frame of video. Both the ball and player position are stored as metadata associated with the frame of video. The position of the ball 410 on the pitch 100 is tracked during the soccer match.

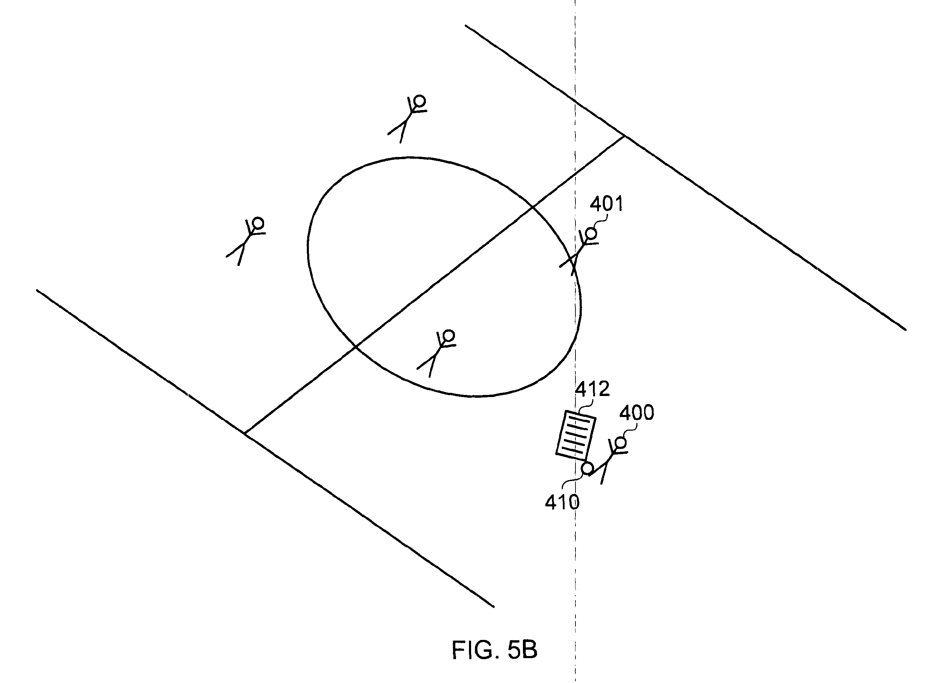

Referring now to Figure 5B the team A highlight 404 and the team B highlight 406 are removed for clarity of explanation. When player A 400 receives the ball 410 during a soccer match, the operator of user terminal 204 identifies to the image processor 200 that this particular frame of video has an action associated with it. As the frames of video are synchronised with the match, by knowing which frame the action takes place in, it is known when during the match the particular action takes place. This action acts as an anchor as will be explained later. In response to the operator identifying this frame as having an action associated with it, an action selection menu 412 appears on the screen. This action selection menu allows the user to select one of a number of alternative actions associated with this frame. For instance, the operator will be able to identify that the ball is to be kicked with the right foot by player A 400. Other alternative options may be that player A 400 is about to kick or volley the ball with this left foot, dribble the ball with his right or left foot, control the ball, head the ball or any other appropriate action. Further, it should be noted that the action may be that the ball has bounced, gone out of play etc. The metadata identifying the action is stored in association with the frame of video to which it corresponds.

In order to allow the user time to select the correct option from the action selection box 412, the video footage is frozen, or in some way paused. Indeed, the video footage is frozen every time the actions selection box is activated. Although the ball 410 is automatically detected and the position of the ball 410 on the pitch is calculated using triangulation, it is also possible that the user can manually mark the position of the ball 410 when activating the action selection box.

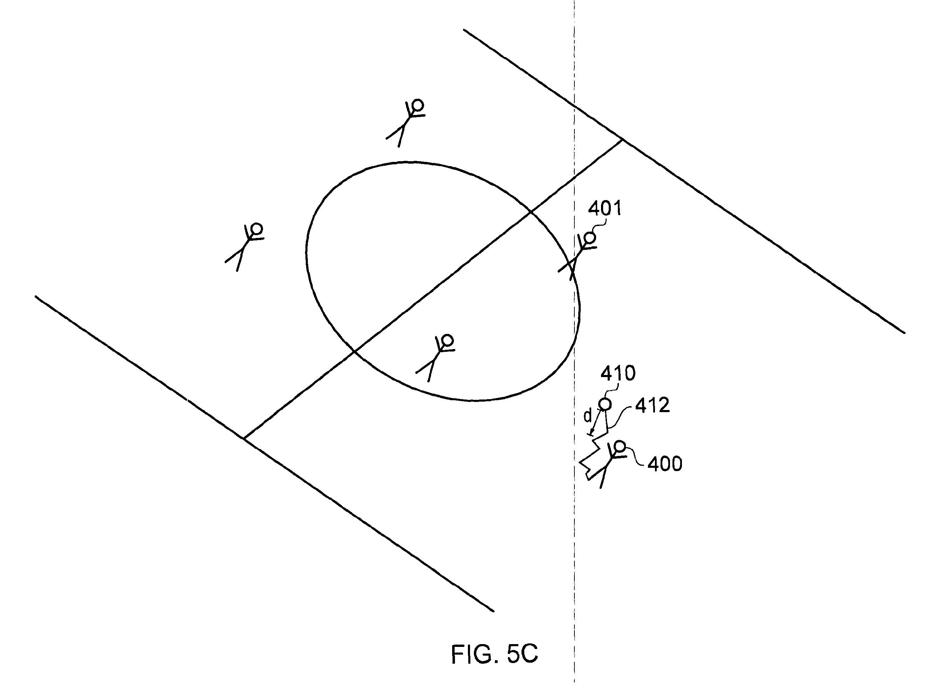

In Figure 5C, the ball 410 is seen in the air heading towards player B 401. This ball is a distance d from the ground. Also, in Figure 5C the detected path of the ball 410 is shown. In order to track the ball 410 in flight, the ball 410 must be detected in each consecutive frame.

As will be apparent from Figure 5C, the detected path of the ball 410 is not correct because a ball will not travel in such a fashion after being kicked. The error between the detected path of the ball 410 and the actual path of the ball is caused by the process of detecting the ball. This is because false detections of balls may appear in consecutive frames or because the position of the ball has not been correctly identified. Other errors may come from incorrectly detecting the motion of the ball, inconsistencies in the location of the centre of the ball 410 between consecutive frames, false detections such as incorrectly identifying the players' feet as the ball 410 and the like. Therefore, any positional data identifying the position of the ball on the soccer pitch 100 that is generated from the detected path of ball 410 will be incorrect.

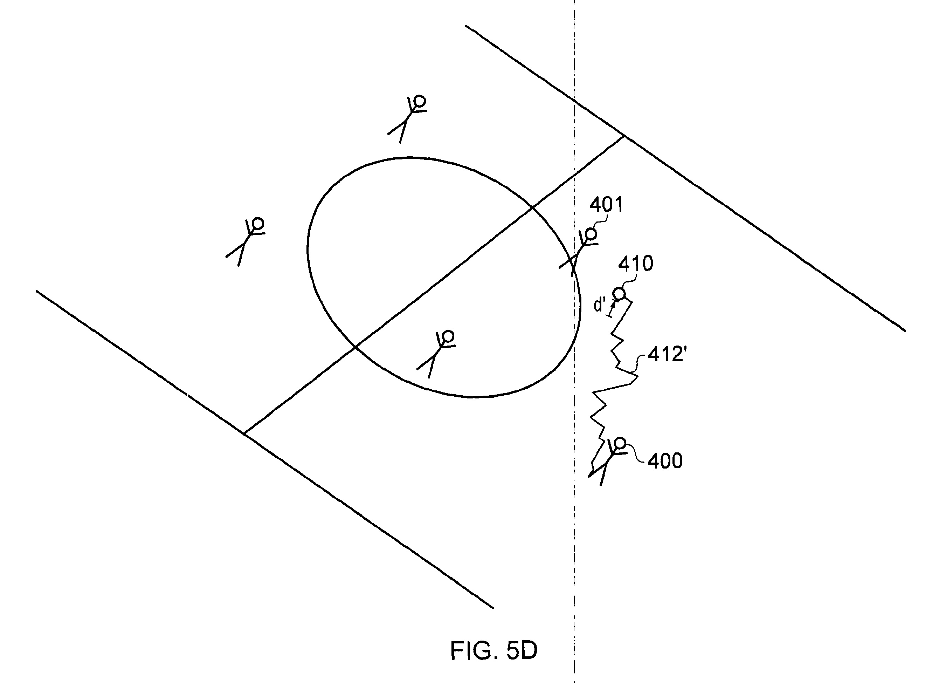

This is again shown in Figure 5D which shows the ball further along the path to player B 401. As can be seen, the further detected path of the ball 412' is inconsistent with the actual path of the ball 410.

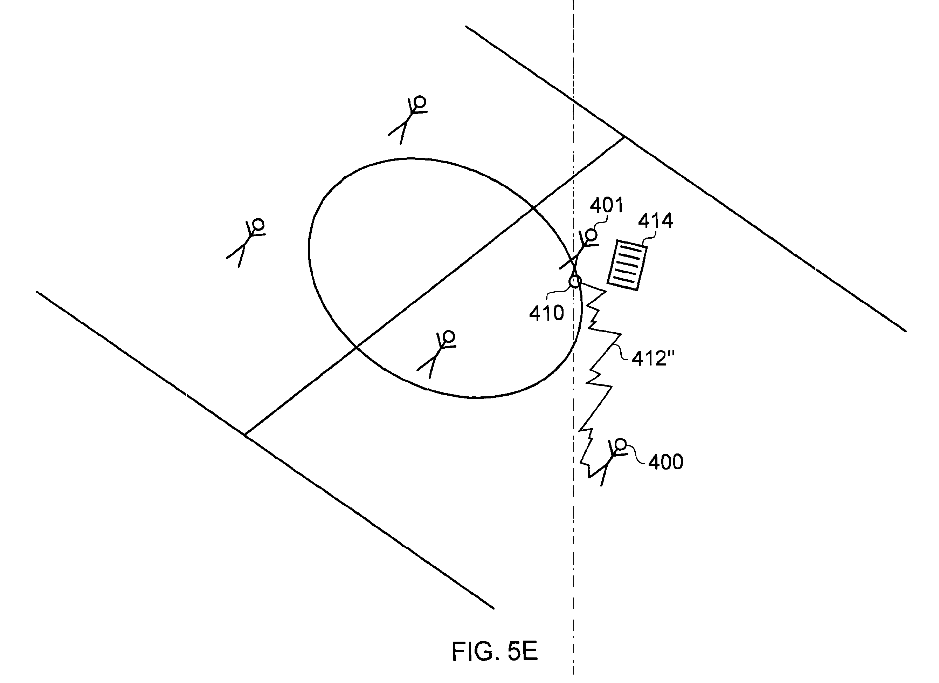

As shown in Figure 5E, when the ball 410 arrives at player B 401, the operator of the user terminal 204 activates a second action selection box 414 which creates a second anchor to produce metadata describing the action associated with the frame and flags this frame of video. The complete detected path of ball 412' is incorrect. Consequently, the image processor 200 will produce incorrect results if the ball 410 is considered to have followed the detected path. However, by opening the second action selection box 414 the operator of the user terminal 204 indicates to the image processor that the ball has arrived at player B 401 and also the destination of the ball 410. This flags to the image processor 200 that the ball 410 has completed its path from player A 400 to player B 401 and also allows the image processor to know the destination of the ball 410.

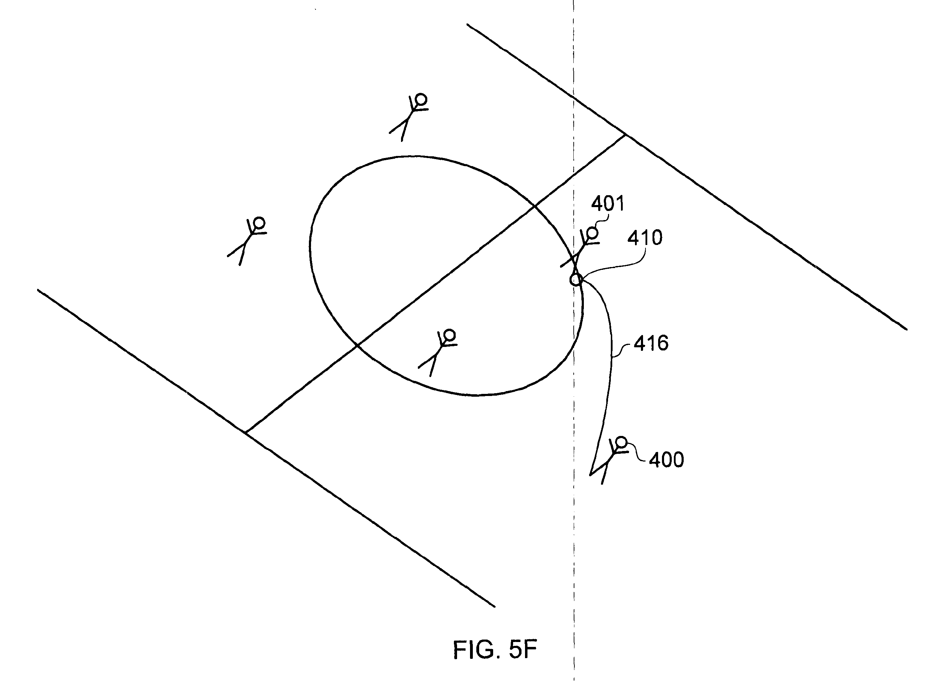

In order to correct the erroneous complete detected path of ball 412" the image processor 200 needs to perform additional processing on the positional data provided by the complete detected path of ball 412". In embodiments of the present invention, the filtered path of the ball 416 (which is the corrected path) shown in Figure 5F is determined by a Van der Monde matrix. As a result of placing the erroneous complete detected path of the ball 412" into the Van der Monde matrix, (i.e. the detected position of the ball 410 from each frame between the first and second activation of the action selection box) coefficients of a polynomial shape that resembles the detected path is generated. The start and end points of the polynomial is provided by the positional information of the ball 410 when the first and second action selection boxes 412 and 414 were activated by the operator of the user terminal 204.

In other words, for any particular frame, the position of the ball can be defined by a polynomial function

$$x_i = a_0 + a_i t_i + a_2 t_i^2 + \ldots + a_n t_i^n \qquad (1)$$

where is the degree of the polynomial used.

So, for a set of M frames (i.e. the frames between the activation of the first and second action selection boxes), the above can be written as a Van Der Monde matrix equation:

$$\begin{bmatrix} 1 + t_0 + t_0^2 + \ldots + t_0^n \\ 1 + t_1 + t_1^2 + \ldots + t_1^n \\ \ldots\ldots\ldots\ldots\ldots\ldots\ldots \\ \ldots\ldots\ldots\ldots\ldots\ldots\ldots \\ 1 + t_M + t_M^2 + \ldots + t_M^n \end{bmatrix} \begin{bmatrix} a_0 \\ a_1 \\ . \\ . \\ a_n \end{bmatrix} = \begin{bmatrix} x_0 \\ x_1 \\ . \\ . \\ x_M \end{bmatrix}$$

This matrix is of the form Va = x, with the values of "a" needing to be found to give the polynomial coefficients.

$$\text{So, } Va = x$$

$$V^T V a = V^T x$$

and

$$a = (V^T V)^{-1} V^T x$$

where $(V^T V)^{-1} V^T$ is known as a pseudoinversion as would be appreciated by the skilled person.

The polynomial having the coefficients generated using the Van Der Monde matrix above provides the filtered path of the ball 416 shown in Figure 5F. The position of the ball on the pitch as determined in each of the frames between operator of user terminal 204 activating the first action selection box 412 and the second action selection box 414 is then adjusted so that it fits the generated polynomial. This provides very realistic, more accurate positional data for the ball. It should be noted here that although polynomial equations were used in this instance, any appropriate type of equation may be used. For example, given accurate knowledge of wind speed, air pressure, surface properties of the ball etc. one could construct an accurate physical model for the motion of the ball and use the image processor 200 to find an iterative solution. However, this requires a large amount of processing power in order to solve accurately. The matrix inversion method, however, requires much less processing power as it uses standard routines widely available and optimised for modem computers. Of course, the invention is not limited to this method, and other polynomial interpolation techniques, such as Neville's algorithm or the Lagrange Form may be used.

In order to generate a polynomial which accurately mimics the true path of the ball, it was found that a polynomial of sixth order was sufficient, although lower order polynomials are used in cases where the sample size (i.e. number of frames between the first and second activation) is limited.

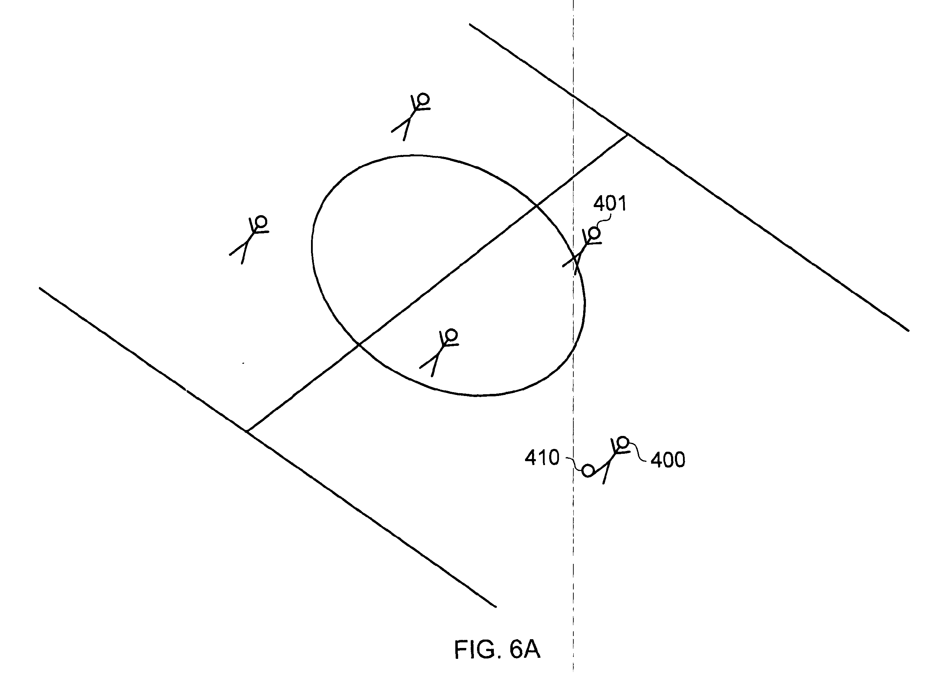

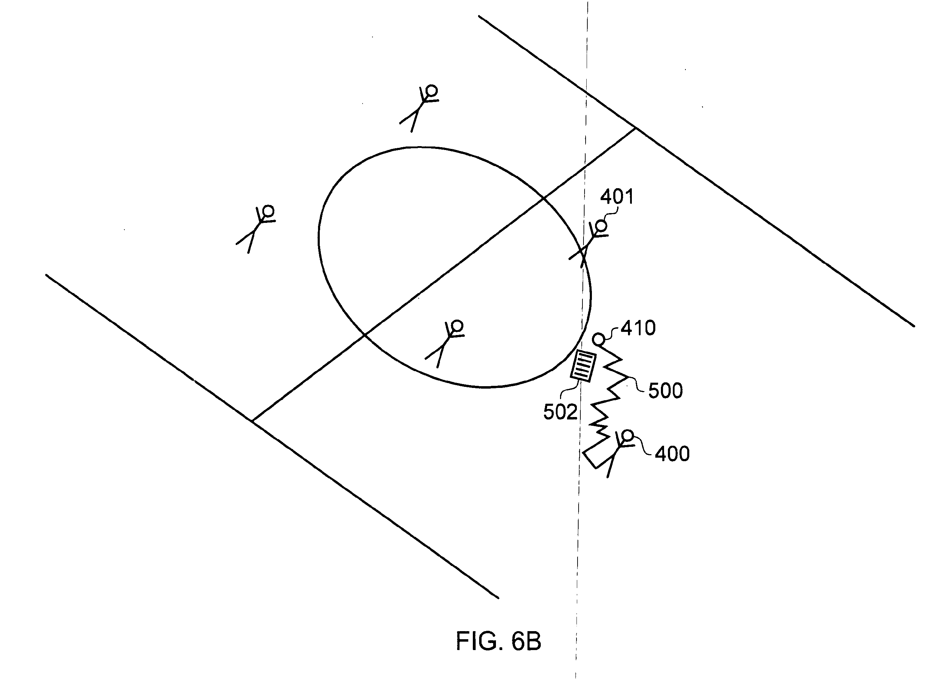

Figure 6A-6E shows the situation where the ball 410 bounces between being kicked by player A and being received by player B. As with Figure 5B, the operator of user terminal 204 uses an action selection box to select that the ball has been kicked by player A using a particular foot. The action selection box is not shown in Figure 6A for clarity. In Figure 6B, the ball 410 bounces on the ground. As already discussed, the detected path of the bouncing ball 500 is shown to be incorrect due to errors in the detection of the ball 410 in each frame. However, when the ball bounces, the operator of user terminal 204 opens a third selection box that contains multiple options for the ball as already discussed. The user selects that the ball bounces and this is stored in the storage medium 202 as metadata associated with that particular frame. At this stage, the image processor 200 generates the filtered path 504 using the Van der Monde matrix as discussed in respect of Figure 5F. Again, the trajectory of the ball, and thus the position of the ball on the pitch determined in every frame is adjusted to be the path followed by the filtered path of the bouncing ball.

After the position of the ball on the pitch has been adjusted according to the trajectory, the position of the bounce (identified by the third action selection box) and the time (or frame) during the match when this action took place is stored in the storage medium 202.

The video is continued and the position of the ball in each frame is detected. The further detected path of the bouncing ball 505' between the marked position of the bounce 515 and player B 401 is again not correct. When the ball 410 arrives at player B 401, the operator of the user terminal 204 opens up a fourth action selection box 505 and selects an appropriate action. The selection of an action acts as an anchor or a flag. Again the action is stored as metadata associated with that frame of video.

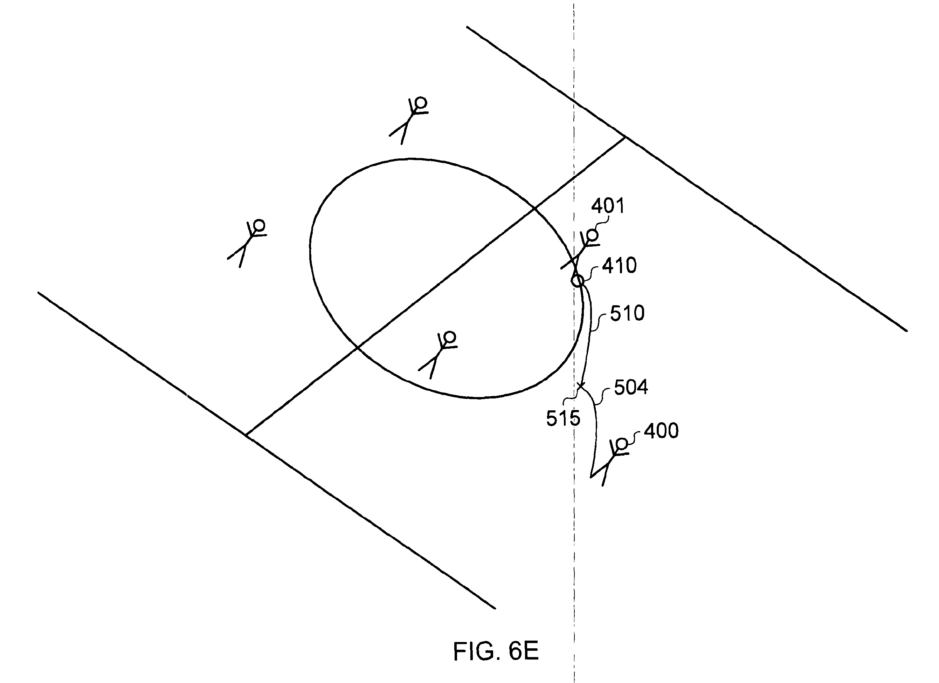

The further detected path of the bouncing ball 500" is subjected to the Van der Monde matrix and the filtered further path of the bouncing ball 510 is generated between the marked position of the bounce 515 and the position of the ball identified with the fourth action selection box. As can be seen from Figure 6E, the path of the bouncing ball is effectively made up of two parts; the filtered path 504 of bouncing ball and the filtered further path 510 of bouncing ball. This shows the sharp changing direction of the ball 410 as it bounces on the ground. In other words, the sharp change in direction may be determined to be the point at which the direction of movement of the ball changes by more than a predetermined angle in a short series of frames. One such angle may be 90°.

Embodiments are advantageous compared with simply filtering the path between player A and player B. This is because if the filtering of the detected path of the ball only took place between player A 400 and player B 401, the whole of the path would be smoothed between the two players. This would be inconsistent with reality. By placing the "flag" when the ball bounces on the ground (i.e. using the third action selection box to mark the frame in which this occurred) the path of the ball 410 on the pitch is made to be more accurate. In embodiments, this rapid change of direction of the ball 410 (for example, when it bounces) may be automatically detected and used to automatically generate the flag and the position of the ball. Also, when the user selects an action such as kicking the ball (left kick, right kick, volley etc), to make an anchor point, a second player heading or volleying the passed ball can be automatically determined from the change in direction and the height of the ball from the ground.

Once player B 401 receives the ball 410 at his feet, he may wish to dribble the ball. This requires the ball to be very closely positioned to the feet of player B 401. Due to the close proximity of the ball 410 with the boots of player 401, the detection of the ball 410 becomes more difficult and leads to more errors. This is true given the fixed nature of the cameras 108, 110 and the camera arrangement 112.

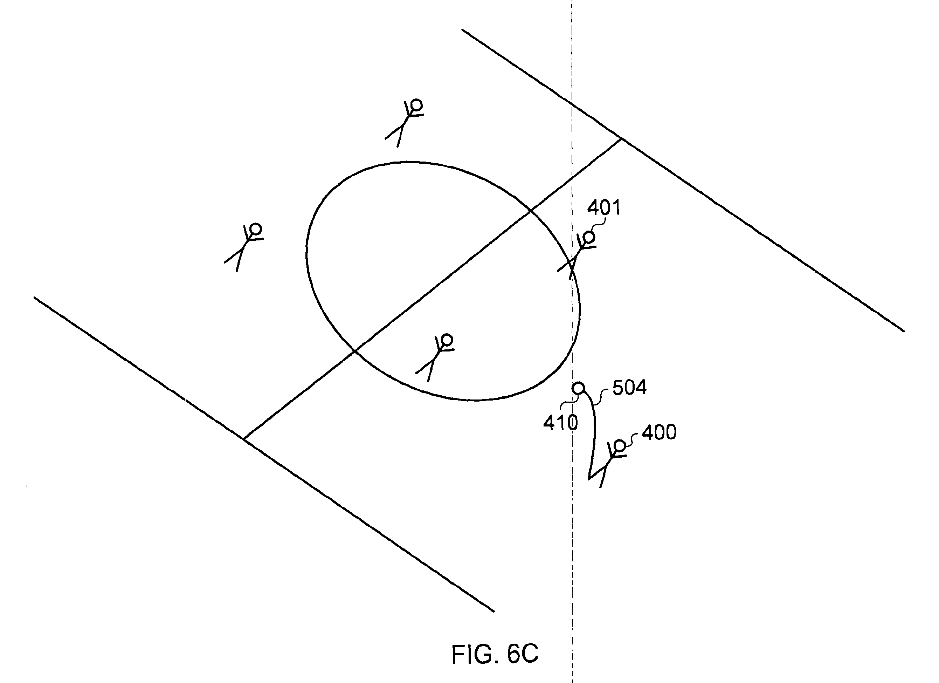

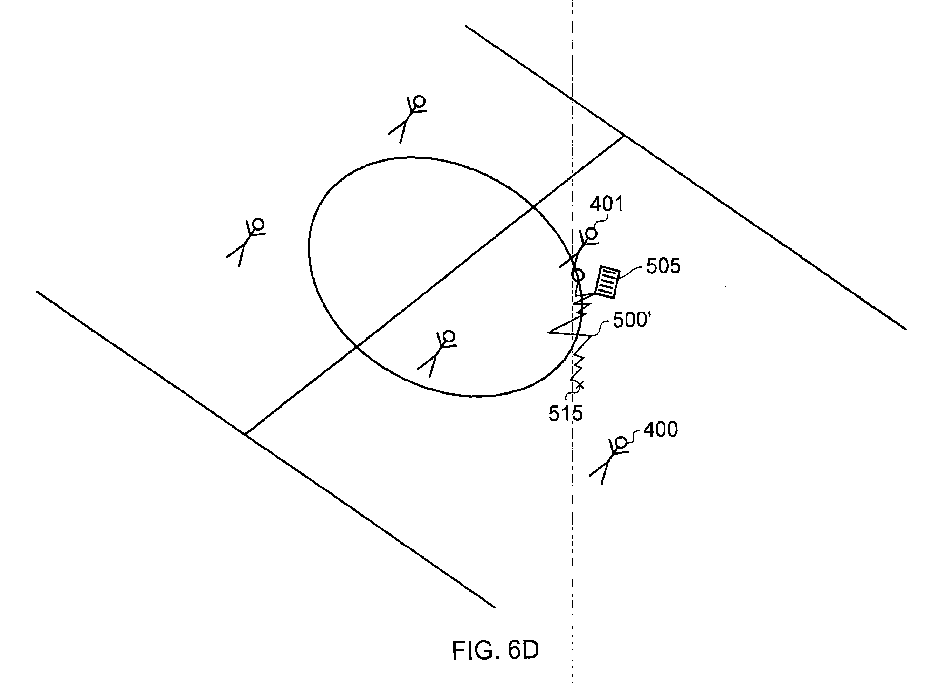

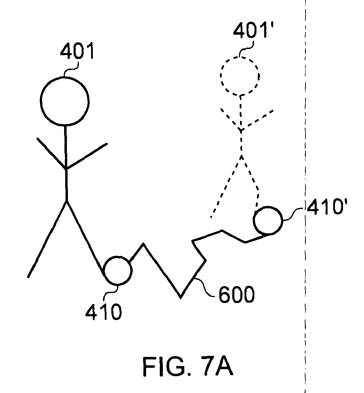

Therefore, if the player dribbles the ball as is the case in Figure 7A, the operator of the user terminal 204 can improve the position or data gathered by the ball detection using a similar technique to that described in Figures 5 and 6.

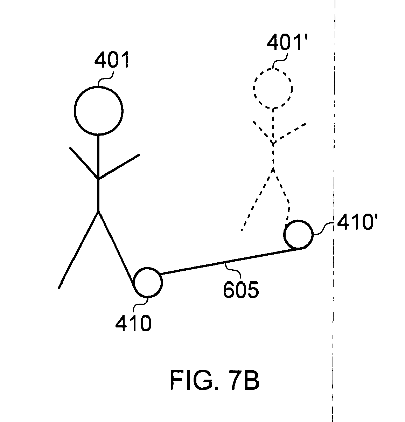

In Figure 7A, player B 401 moves the ball to position 410'. This gives a new position B 401' (shown by a dotted line). However, although the player ran in a curved direction, the detected path of the dribbled ball 600 is again erroneous. This will lead to errors in determining the position of the ball on the pitch between consecutive frames. Therefore, the operator of the user terminal generates the flags or anchors, every predetermined number of frames. For instance, the operator may generate the flags every 5 frames, or indeed any other predetermined number of frames as he or she sees fit. After each flag or anchor, the image processor 200 subjects the detected path of the dribbled ball 600 to the Van der Monde matrix between consecutive anchor points during the dribbling sequence which provides the filtered path of the dribbled ball 605 as shown in Figure 7B.

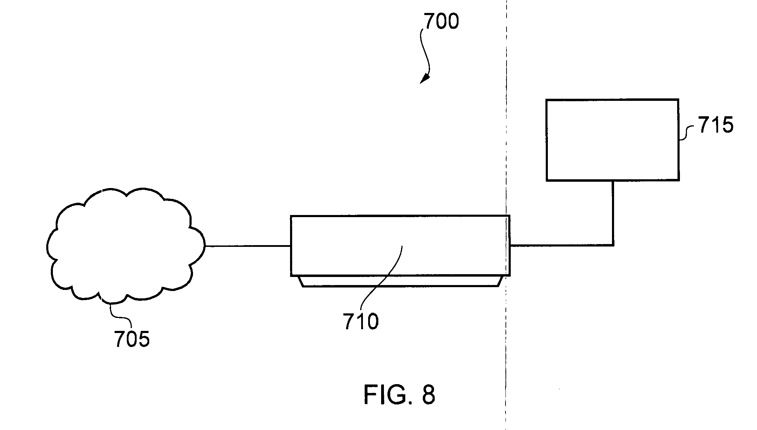

Referring to Figure 8, once the position of the ball has been established for every frame of the match, the metadata associated with the match, the selected actions from each occurrence of the action selection box and the player position information generated by player tracking is collated. This collated data provides enough information to recreate the match using virtual players. In other words, a virtual model of the pitch with virtual models of each player can be created. These models can be created on a general purpose home computer system 700, such as a Playstation ® 3 710 connected to a network 705 and a display 715.

The positional information of each player in each frame will inform the Playstation ® 3 710 where to position the virtual players on the virtual pitch. Additionally, the filtered position information of the ball will inform the Playstation ® 3 710 where to position the ball at any one time. Moreover, with the information identifying each occurrence of the selected action, the Playstation ® 3 710 will be able to manipulate the virtual model of the player so that he or she kicks the ball with the correct foot at the correct time.

With this level of detail, it is possible to morph real-time video footage into a virtual environment, for use in a computer game. The collated data of the real-life game can be provided over the network 705, such as the Internet or on the storage medium containing the game (not shown) or a combination of the two. Alternatively, or in addition, it is possible for detailed analysis of the game to be carried out either by soccer coaches or television pundits.

Although the above has been described with reference to the filtered path of the ball being corrected in short segments of footage, it should be understood that this is not the only method of implementing the invention. In other embodiments, the position of the ball for every frame of a match is determined, and all the anchors, and metadata associated with the anchors are generated as described above. The ball filtering is then applied post-production and to the entire footage of the match with the filtering taking account of the anchors.

Although the above discussion relates to the tracking of a ball in a soccer match, the invention is no way limited to this. For instance, the object could be a ball in any sport or even any object that has to be detected and subsequently tracked through a series of images.

Further, although the foregoing has been described with reference to an image processor 200, embodiments of the invention can be performed on a computer. This means that in embodiments of the invention, there is provided computer program that contains computer readable instructions to configure a computer to perform the roll of the image processor 200 as discussed above. This computer program may be provided in an optical storage medium or a solid state medium or even a magnetic disk type medium.

Features of embodiments may be provided in accordance with the following appended numbered paragraphs.

## CLAUSES

1. An apparatus for tracking an object in a video clip of a location captured by at least one camera fixed in position, the video having a first and a second flagged frame, the apparatus comprising:

a first detector operable to detect a first anchor point in the first flagged frame of video,
a second detector operable to detect the position of the object in the location in first flagged frame and subsequent frames of video;
a third detector operable to detect a second anchor point in the second flagged frame of video, and to detect the position of the object in the location in the second flagged frame of video; and
a processor operable to adjust the position of the object in the location in the frames of video between the first flagged frame and the second flagged frame in accordance with a polynomial equation wherein metadata identifying the action taking place at the detected first and/or second anchor point is defined and the action is selected from a predetermined list of actions.

2. An apparatus according to clause 1, wherein the polynomial equation extends between the first position of the object in the location in the first flagged frame of video and the second position of the object in the location in the second flagged frame of video.

3. An apparatus according to clause 2, wherein the parameters of the polynomial equation are selected such that the error measurement between the detected position of the object in the subsequent frames of video and the position of the object in the location in the subsequent frames of video defined by the polynomial is a minimum.

4. An apparatus according to any one of clauses 1, 2 or 3, wherein the second anchor point is detected in accordance with a change in direction of the object.

5. An apparatus according to any one of clauses 1, 2, 3 or 4, wherein the polynomial is generated using polynomial interpolation.

6. An apparatus according to clause 5, wherein the polynomial is generated using a Van Der Monde matrix.

7. An apparatus according to any one of clauses 1 to 6, wherein prior to the tracking of the object in the clip, the processor is operable to define a plurality of positions on a frame of video that corresponds to a known position in the location, and defining other positions in the video relative to the defined position in the location in the frame.

8. An apparatus according to any one of clauses 1 to 7 wherein the location contains at least one straight line, and prior to the tracking of the object in the clip, the position of the lines in the clip captured by the camera are fitted to correspond to the straight lines in the location.

9. An apparatus according to any one of clauses 1 to 8 wherein the adjusted position of the object is used to define

# EP 2 237 191 A2

the position of the object within a virtual environment.

## Claims

1. A method of tracking an object in a video of a location captured by at least one camera fixed in position, the video having a first and a second flagged frame, the method comprising:

   detecting a first anchor point in the first flagged frame of video,;
   detecting the position of the object in the location in the first flagged frame and subsequent frames of video;
   detecting a second anchor point in the second flagged frame of video,
   detecting the position of the object in the location in the second flagged frame of video; and
   adjusting the position of the object in the location in the frames of video between the first flagged frame and the second flagged frame in accordance with a polynomial equation, wherein metadata identifying the action taking place at the detected first and/or second anchor point is defined and the action is selected from a predetermined list of actions..

2. A method of tracking according to claim 1, wherein the polynomial equation extends between the position of the object in the location in the first flagged frame of video and the position of the object in the location in the second flagged frame of video.

3. A method of tracking according to claim 2, wherein the parameters of the polynomial equation are selected such that the error measurement between the detected position of the object in the frames of video and the position of the object in the location in the frames of video defined by the polynomial is a minimum.

4. A method of tracking according to any preceding claim, wherein the second anchor point is detected in accordance with a change in direction of the object.

5. A method of tracking according to any preceding claim, wherein the polynomial is generated using polynomial interpolation.

6. A method of tracking according to claim 5, wherein the polynomial is generated using a Van Der Monde matrix.

7. A method of tracking according to any preceding claim wherein prior to the tracking of the object in the clip, the method comprises defining a plurality of positions on a frame of video that corresponds to a known position in the location, and defining other positions in the video relative to the known position in the location from the frame of video.

8. A method of tracking according to any preceding claim wherein the location contains at least one straight line, and prior to the tracking of the object in the clip, the position of the lines in the clip captured by the camera are fitted to correspond to the straight lines in the location.

9. A method of tracking according to any preceding claim wherein the adjusted position of the object is used to define the position of the object within a virtual environment.

10. An apparatus for tracking an object in a video clip of a location captured by at least one camera fixed in position, the video having a first and a second flagged frame, the apparatus comprising:

    a first detector operable to detect a first anchor point in the first flagged frame of video,
    a second detector operable to detect the position of the object in the location in first flagged frame and subsequent frames of video;
    a third detector operable to detect a second anchor point in the second flagged frame of video,and to detect the position of the object in the location in the second flagged frame of video; and
    a processor operable to adjust the position of the object in the location in the frames of video between the first flagged frame and the second flagged frame in accordance with a polynomial equation wherein metadata identifying the action taking place at the detected first and/or second anchor point is defined and the action is selected from a predetermined list of actions.

11. A computer having a storage medium containing video material and the adjusted position data associated therewith generated in accordance with a method according to any one of claims 1 to 9, and a processor, wherein the processor is operable to generate a virtual environment containing the object located at a position in the virtual environment that corresponds to the stored adjusted position data associated with the video material.

**12.** A storage medium containing video material and adjusted position data associated therewith generated in accordance with a method according to any one of claims 1 to 9.

**13.** A system for capturing and tracking an object in a location comprising at least one camera fixed in position and an apparatus according to claim 10.

**14.** A computer program containing computer readable instructions which, when loaded onto a computer, configure the computer to perform a method according to any one of claims 1 to 9.

**15.** A storage medium configured to contain the computer program according to claim 14 therein or thereon.

FIG. 1

EP 2 237 191 A2

EP 2 237 191 A2

FIG. 2

FIG. 3

EP 2 237 191 A2

FIG. 4A

104'

104

FIG. 4B

FIG. 5A

FIG. 5B

FIG. 5C

FIG. 5D

EP 2 237 191 A2

FIG. 5E

401
414
410
412"
400

EP 2 237 191 A2

FIG. 5F

FIG. 6A

FIG. 6B

FIG. 6C

FIG. 6D

EP 2 237 191 A2

EP 2 237 191 A2

FIG. 6E

EP 2 237 191 A2

FIG. 7A

EP 2 237 191 A2

FIG. 7B

715

700

710

FIG. 8

705

**REFERENCES CITED IN THE DESCRIPTION**

**Patent documents cited in the description**

- GB 2444533 A
- GB 2452512 A